# EUROPEAN PATENT SPECIFICATION

(11) **EP 2 736 191 B1**
(45) Date of publication and mention of the grant of the patent: **07.08.2019**
(21) Application number: 12803232.3
(22) Date of filing: 01.06.2012
(51) Int. Cl.: H04L 12/775, H04L 12/773, H04L 12/713, H04L 12/715

(54) **VIRTUAL ROUTER SYSTEM AND VIRTUAL ROUTER IMPLEMENTATION METHOD**
VIRTUELLES ROUTERSYSTEM UND IMPLEMENTIERUNGSVERFAHREN FÜR EINEN VIRTUELLEN ROUTER
SYSTÈME DE ROUTEUR VIRTUEL ET PROCÉDÉ DE MISE EN OEUVRE DE ROUTEUR VIRTUEL

(30) Priority: 24.06.2011 CN 201110174217
(43) Date of publication of application: 28.05.2014
(73) Proprietor: ZTE Corporation, Shenzhen, Guangdong 518057 (CN)
(72) Inventor: GU, Zhongyu, Shenzhen Guangdong 518057 (CN)
(74) Representative: Studio Torta S.p.A.
(86) International application number: PCT/CN2012/076396
(87) International publication number: WO 2012/174980

(56) References cited:
- CN-A- 1 503 506
- CN-A- 101 442 442
- CN-A- 101 473 598
- US-A1- 2002 156 828
- US-A1- 2005 169 276

## Description

### Technical Field

The present invention relates to the field of communications, in particular to a virtual router system and a method for implementing virtual routers.

### Background

In order to improve the usage efficiency of resources or reduce the expenditures, etc., virtualization technologies are becoming more and more popular. For example, the virtual machine technique which virtualizes one computer into multiple computers, and the virtualization of routers, other network devices, even networks, etc. have already been accepted in the industry and have been deployed. According to different implementation or the recognition of different companies, the virtualized router has different names. For example, it can be called virtual router or logical router. One classification is: when a router is virtualized into multiple physically independent routers, it is called logical router; and when more resources are shared or the virtualization is implemented via software, it is called virtual router (VR). Of course, there exist cases different names are used to indicate different situations in the industry, even cases where they are called oppositely, for example, the former is called virtual router, while the latter is called logical router. There are even cases where a router function is implemented by simulating via a PC (Personal Computer) machine, which is also called virtual router. Therefore, according to the specific situations of the problems to be solved, the virtual router is defined as follows in the present application: in the view of a user or network device management, one router is virtualized into multiple routers that can be managed independently by means of hardware, or software, or a combination of software and hardware, so as to satisfy different application requirements, while for logical router, it can be considered as having the similar meaning.

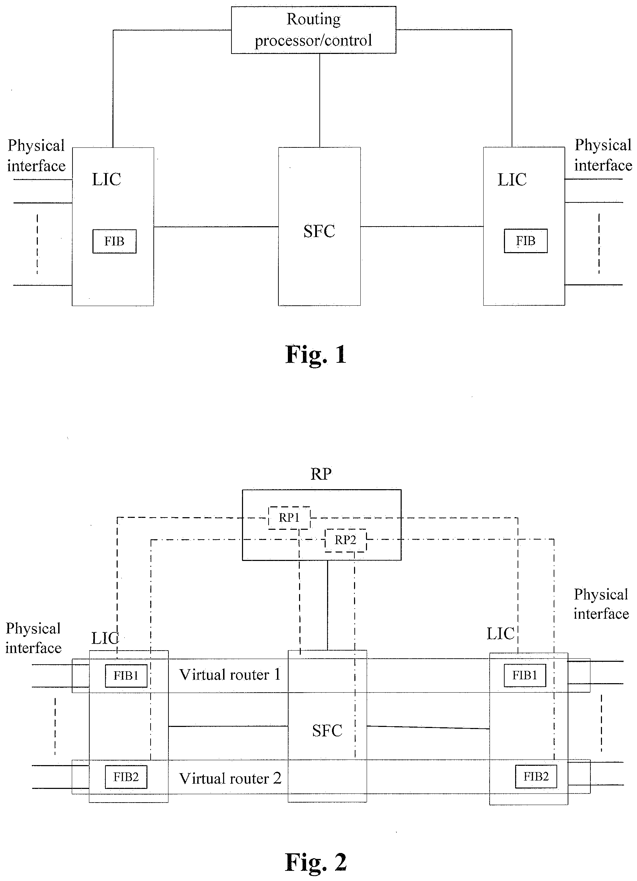

Fig. 1 is a functional diagram of a typical router. As shown in Fig. 1, functionally speaking, a typical router should include at least one interface card (also called LIC (line interface card) or interface module), a switching function board/module (also called SFC (switching fabric card), or switching module), a route/routing processor or routing processor module (RP)/main processing (or control) card/main processing module/unit, a chassis and environmental system and relevant functional software and so on. According to the type or the capacity of the device and so on, the above-mentioned boards/cards can be combined on one circuit board to compose a medium/low-end integral router; or multiple related cards may exist in one system, which consists of a large-scale routing system/router. The LIC includes a forwarding processing component (further includes a forwarding information base (FIB)) which is used to connect to other devices via a physical interface.

Fig. 2 is a schematic diagram showing the implementation of virtual routers. Multiple virtual routers are implemented by functionally slicing/partitioning the LIC and the RP and sharing the switching function. Regarding the virtual router 1 and virtual router 2 as shown in the figure, the FIB therein is functionally divided into FIB 1 and FIB2, and the RP is divided to include RP1 and RP2.

Under the current technical implementation, the virtual routers are mainly implemented in medium/high-end routers. On one hand, the cost of router is high, and on the other hand the amount of the virtual devices obtained by virtualization is not big enough. Therefore, in the case where a large number of virtual routers are required, especially in the medium/low-end application scenarios, low-cost virtual router implementation is needed, however, no solution has been proposed.

U.S. Patent application No. 2005/169276 discloses routers and, more specifically, an adaptive router architecture. However, the above mentioned problem still remains unsolved.

### Summary

A virtual router system and a method for implementing virtual routers are provided in the present invention to at least solve the above-mentioned problem that virtual routers are mainly implemented in medium/high-end routers in the related art, wherein on one hand the cost is relatively high, and on the other hand the amount of the virtual devices obtained by virtualization is not big enough, thus not satisfying the requirements for a large number of low-cost virtual routers.

According to an aspect of the present invention, a virtual router system is provided, including: one or more routers and one or more routing processor servers, wherein each router comprises one or more interface modules, wherein each interface module comprises: at least one packet processing functional module, a forwarding module and one or more forwarding information bases (FIBs), wherein one or more physical interfaces of the interface module or one or more sub-interfaces of the one or more physical interfaces are assigned to different virtual routers accordingly, and one-to-one correspondence exists between each virtual router and related physical interface or sub-interface; and each routing processor server comprise multiple routing processors, wherein one-to-one correspondence exists between each routing processor and related virtual router, and each routing processor is configured to execute the routing processing function of the corresponding virtual router.

Preferably, the one or more routing processor servers comprise one of the following: a personal computer (PC) cluster, a PC server cluster, a blade server or blade server cluster, and a dedicated computer system.

Preferably, the one or more routing processor servers are extended by one of the following means: adding a PC to the PC cluster, adding a PC server to the PC server cluster, adding an extension module to the blade server and adding an extension module to the dedicated computer system.

Preferably, each router further comprises a routing processor module or a main processing module, wherein the one or more routing processor servers coordinate with the routing processor module or the main processing module to implement the multiple routing processors by creating and running multiple routing processor instances.

Preferably, the different virtual routers have different virtual router identifiers, wherein the virtual router identifiers are configured router identifiers (RouterIDs) or network identifiers (NetIDs).

Preferably, the one or more routers and the one or more routing processor servers are connected via an Ethernet switch or a network.

Preferably, the one or more routers are connected to the one or more routing processor servers by one of the following means: via physical interfaces used for user service traffic of the one or more routers; via an interface provided by replacement of the routing processor module or main processing module of the one or more routers, wherein the replacement of the routing processor module or main processing module is configured to forward protocol and control information about the one or more routers to the one or more routing processor servers; via an extension interface of the routing processor module of each router.

Preferably, the one or more routing processor servers are configured to collect or receive configuration and management information of the virtual routers and configure and manage the virtual routers according to the configuration and management information collected or received.

Preferably, the one or more routing processor servers are implemented by inserting one or more virtual routing processor extension boards into the one or more routers or are directly implemented by the routing processor module of the one or more routers.

Preferably, the routing processing function of the routing processors is implemented by running different routing processor images on different virtual machines in the one or more routing processor servers.

Preferably, the one or more routers and the one or more routing processor servers are connected by a standardized interface.

According to another aspect of the present invention, a method for implementing virtual routers is provided, and the method is applied to the above virtual router system, the method including: a router receiving a packet from a physical interface of an interface module of the router; according to configuration information about a virtual router corresponding to the physical interface or sub-interface, adding virtual router identifier information of the virtual router to the packet; and the interface module executing the packet processing function, and forwarding the packet which is added with the virtual router identifier information according to the type of the packet.

Preferably, the packet is a protocol packet; the packet processing functional module of the interface module sends the packet which is added with the virtual router identifier information to the routing processor of the corresponding virtual router in one or more routing processor servers, and the corresponding routing processor generates or updates the corresponding routing table entry according to the packet.

Preferably, the packet is a data packet; and the interface module executing the packet processing function, and forwarding the packet which is added with the virtual router identifier information according to the type of the packet comprising: performing lookup in the forwarding information base (FIB) of the corresponding virtual router using the destination address of the packet; when a corresponding entry of the packet is found, according to interface information in the corresponding entry, triggering one or more switching modules of the router to schedule and then forward the packet; and when the packet arrives at the egress interface module, the corresponding interface module executing the packet processing function, decapsulating the virtual router identifier information from the packet, processing and encapsulating the packet from which the virtual router identifier information is deleted, and forwarding the packet to the corresponding physical interface or sub-interface.

In the embodiments of the present invention, one or more external routing processor servers are used to implement the virtual routers, therefore, the implementation of the embodiments of the present invention does not need the high-performance router, i.e. even a low-end router can be used to implement virtual routers, in this way, low-cost virtual routers can be implemented. In addition, because one or more external routing processor servers are used to implement virtual routers, in the case where a large number of virtual routers are needed, the problem that the amount of virtual routers implemented is not big enough in the related art can be solved by using one or more routing processor servers or using higher performance routing processor server so as to implement the virtual routers according to practical requirements.

### Brief Description of the Drawings

Drawings, provided for further understanding of the present invention and forming a part of the specification, are used to explain the present invention together with embodiments of the present invention rather than to limit the present invention. In the drawings:
Fig. 1 is a functional diagram of a typical router according to the related art;
Fig. 2 is a schematic diagram showing the implementation of virtual routers according to the related art;
Fig. 3 is a functional schematic diagram of a virtual router system according to an embodiment of the present invention;
Fig. 4 is a flowchart of a method for implementing virtual routers according to an embodiment of the present invention;
Fig. 5 is a schematic diagram showing the implementation of virtual routers by connecting an external routing processor server according to an embodiment of the present invention; and
Fig. 6 is a schematic diagram of a device as an implementation solution of virtual routers by extension of routing processor unit according to an embodiment of the present invention.

### Detailed Description of the Embodiments

The present invention is defined by the independent claims, to which reference should now be made. Specific embodiments are defined by the dependent claims.

The present invention is described below with reference to the accompanying drawings and embodiments in detail. Note that, the embodiments of the present invention and the features of the embodiments can be combined with each other if there is no conflict.

It is mentioned in the related art that virtual routers are mainly implemented in medium/high-end routers, wherein on one hand the cost is relatively high, and on the other hand the amount of the virtual devices obtained by virtualization is not big enough, thus the demands for a large number of low-cost virtual routers are not fulfilled. The embodiments of the present invention provide a virtual router system and a virtual router implementation method, which can fulfill the application requirements of a low-cost virtual router environment.

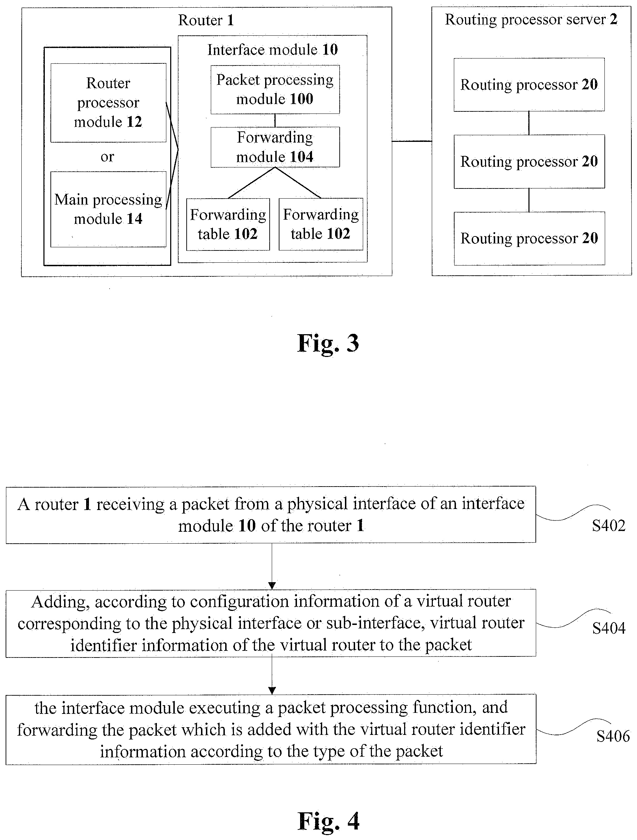

In order to solve the above-mentioned technical problem, a virtual router system is provided in an embodiment of the present invention. As shown in Fig. 3, the system includes: one or more routers **1** and one or more routing processor servers **2.** Each router **1** includes one or more interface modules **10.** Each interface module **10** includes: at least one packet processing functional module **100,** a forwarding module **104** and one or more forwarding tables **102.** One or more physical interfaces of the interface module **10** or one or more sub-interfaces (also called logical interfaces) of the one or more physical interfaces are assigned to different virtual routers accordingly. One-to-one correspondence exists between each physical interface or sub-interface and related virtual router. Each routing processor server **2** includes multiple routing processors **20.** One-to-one correspondence exists between each routing processor **20** and related virtual router. Each routing processor **20** is configured to execute the routing processing function of the corresponding virtual router.

One-to-one correspondence also exists between each forwarding table **102** in the interface module **10** and related virtual router.

In a preferred embodiment of the present invention, the one or more routing processor servers **2** include but are not limited to one of the following: a personal computer (PC) cluster, a PC server cluster, a blade server or blade server cluster, and a dedicated computer system.

Corresponding to the above-mentioned implementation, in another preferred embodiment of the present invention, the one or more routing processor servers **2** can be extended by one of the following means: adding a PC to the PC cluster, adding a PC server to the PC server cluster, adding an extension module to the blade server and adding an extension module to the dedicated computer system.

In a preferred embodiment of the present invention, each router **1** also includes: a routing processor module **12**; and the one or more routing processor servers **2** coordinate with the routing processor module **12** to implement multiple routing processors **10** by creating and running multiple routing processor instances which implement the routing processing function of the virtual routers, wherein one-to-one correspondence exists between each routing processor instance and related routing processor **10.**

In a preferred embodiment of the present invention, the different virtual routers have different virtual router identifiers. There may be multiple types of virtual router identifiers, for example, the virtual router identifiers can be random identifiers, or router identifiers, or network identifiers, or server identifiers and so on. Preferably, the virtual router identifier is a configured router identifier (RouterID) or network identifier (NetID). Each virtual router identifier can be defined by the router manager.

In a preferred embodiment of the present invention, the one or more routers **1** and the one or more routing processor servers **2** can be connected via an Ethernet switch or a network.

In another preferred embodiment of the present invention, each router **1** may also include: a routing processor module **12** or a main processing module **14**; and the one or more routers **1** are connected to the one or more routing processor servers **2** by one of the following means: via physical interfaces used for user service traffic of the one or more routers **1**; via an interface provided by replacement of the routing processor module **12** or main processing module **14** of the one or more routers **1,** wherein the replacement of the routing processor module or main processing module is configured to forward protocol and control information of the one or more routers to the one or more routing processor servers **2**; and via the extension interface of the routing processor module **12** of each router **1.**

In a preferred embodiment of the present invention, the one or more routing processor servers **2** can be implemented by inserting one or more virtual routing processor extension boards into the one or more routers **1,** or are directly implemented by the routing processor module **12** of the one or more routers **1.** In this scenario, the one or more routing processor servers **2** can also support the management function and provide a router management function for each virtual router.

In a preferred embodiment of the present invention, the one or more routing processor servers **2** may also be configured to collect or receive configuration and management information of the virtual routers, and configure and manage the virtual routers according to the configuration and management information collected or received.

In another preferred embodiment of the present invention, the routing processing function of routing processors **20** is implemented by running different routing processor images on different virtual machines in the one or more routing processor servers **2,** wherein the routing processor images refer to the function of the routing processor module or the tailoring thereof. For example, the one or more routing processor servers **2** run software of a routing processing service to implement multiple routing processor instances, so as to support the implementation of the virtual routers.

In a preferred embodiment of the present invention, the one or more routers **1** and the one or more routing processor servers **2** can be connected by a standardized interface, so that routers **1** of different manufactures or types can implement the function of the virtual routers by using the same type of routing processor server **2.** Such standardized interface includes, for example, standard connection protocol, authentication and information security method, formats and contents of the information exchanging, etc.

In the embodiments of the present invention, the router extends the routing processing capability by at least one external routing processor server to implement multiple virtual routers. The one or more interfaces or one or more sub-interfaces of the router can be configured to be associated with different virtual routers, wherein the different virtual routers are distinguished with different virtual router identifiers. That is, in the embodiments of the present invention, one or more external routing processor servers can be used to implement the virtual routers, therefore, the implementation of the embodiments of the present invention does not need the high-performance router, i.e., even a low-end router can be used to implement the function of the virtual routers, in this way, low-cost virtual routers can be implemented. In addition, because one or more external routing processor server are used to implement the virtual routers, in the case where a large number of virtual routers are needed, the problem that the amount of virtual routers implemented is not big enough in the related art can be solved by using one or more several routing processor servers or using the higher performance routing processor server so as to implement the virtual routers according to practical requirements.

Based on the same concept of invention, an embodiment of the present invention also provides a method for implementing virtual routers. The method can be applied to the above-mentioned virtual router system. Fig. 4 is a flowchart of a method for implementing virtual routers according to an embodiment of the present invention, and as shown in Fig. 4, the method mainly includes the following steps.

Step S402, a router **1** receives a packet from a physical interface of an interface module **10** of the router **1.**

Step S404, according to configuration information of a virtual router corresponding to the physical interface or sub-interface, virtual router identifier information of the virtual router is added to the packet.

Step S406, the interface module **10** executes a packet processing function, and forwards, according to the type of the packet, the above-mentioned packet which is added with the virtual router identifier information.

For example, if the packet is a protocol packet, the packet processing module **104** of the interface module **10** sends the above-mentioned packet which is added with the virtual router identifier information to a routing processor **20** corresponding to the virtual router identifier information in one or more routing processor servers **2,** and the corresponding routing processor **20** generates or updates a corresponding routing table entry according to the packet.

Or if the above-mentioned packet is a data packet, the destination address of the packet is used to lookup in an FIB of a corresponding virtual router (the virtual router corresponding to the virtual router identifier information) in a forwarding module **102** of the interface module **10**; when a corresponding entry of the packet is found, one or more switching modules of the router are triggered to schedule and then forward the packet according to interface information in the corresponding entry; and when the packet arrives at an egress interface module, the corresponding interface module **10** executes the packet processing function, decapsulates the virtual router identifier information from the packet, processes and encapsulates the packet from which the virtual router identifier information is deleted, and forwards the packet to the corresponding physical interface or sub-interface.

The present invention will be further described in details with reference to the embodiments and drawings below.

The key restriction factor of the implementation of virtual routers, i.e. how many virtual routers a router can be virtualized, lies in the restriction of related routing and packet processing resources, such as the resources for routing processing and packet forwarding and so on. For example, the size of the storage of the routing processor restricts the amount of RIBs (routing information bases or routing tables) that can be divided into or supported. Another restriction factor lies in the requirement on the processing performance. For example, the protocol packet cannot be processed immediately when lots of virtual routers are virtualized; apart from that, different virtual routers need to have their own forwarding tables, and this may also influence the forwarding performance, thus not being able to support the implementation of a big amount of virtual routers.

Therefore, in order to implement the virtual routers, relevant processing capability and/or relevant resources need to be extended, and such extension can be realized by adding one or more routing protocol cards to the router. This is the implementation used in the art, especially in the implementation of a high-end router. As for medium/low-end routers, the functions thereof that can be extended are relatively limited in general; therefore, the architecture of the router needs to be completely redesigned in order to implement the function of the virtual routers.

The embodiments of the present invention provide a solution aiming at the above-mentioned situation, i.e. implementing virtual routers by connecting one or more external routing processor servers. At the same time, the embodiments will further introduce how to implement virtual routers by connecting the one or more external routing processor servers.

### Embodiment 1

In this embodiment, description is based on the case where virtual routers are implemented by connecting one or more routers to one or more routing processor servers via a network or Ethernet switch.

In this embodiment, the implementation of the virtual routers is based on the router which is connected to one or more extendable and external routing processor servers, and upgrading the control software and the relevant functions of the existing router, i.e. by means of software update, without completely discarding or redesigning the architecture of the existing router system.

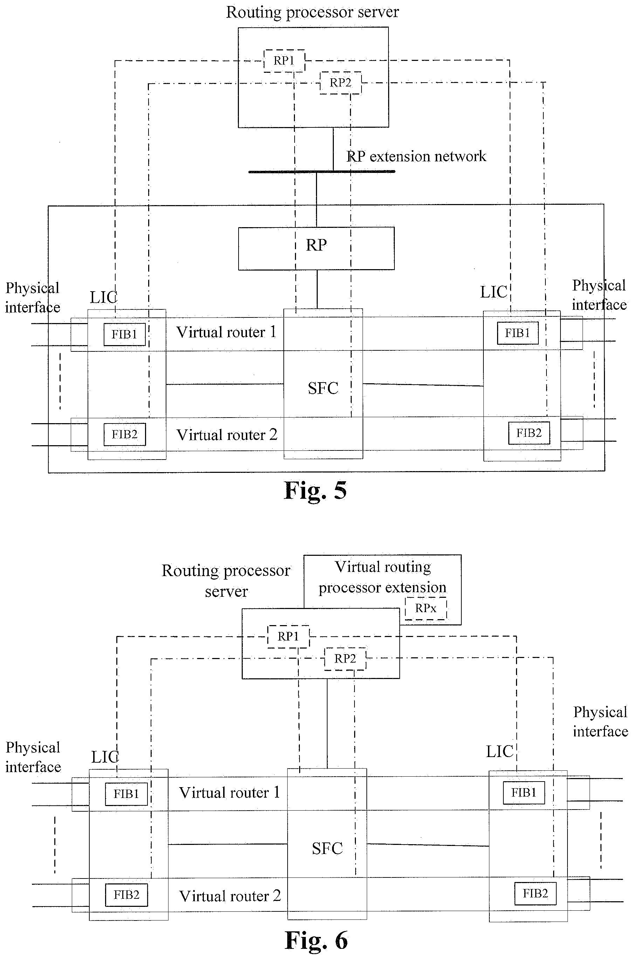

Fig. 5 is a schematic diagram showing the implementation of virtual routers by connecting an external routing processor server. The virtual routers are implemented by connecting one or more external routing processor servers via an RP extension network.

The hardware portion of the routing processor server may be implemented by a PC cluster or a PC server cluster. The routing processor server may also be implemented by a blade server or a specially designed carrier class computing device system. For example, a system designed based on ATCA (advanced telecommunication computing architecture) includes backup power supply system, backup fan and management system, and backup processing module and other backup key processing modules, such as the connection and switching system of the processing module and so on, so as to obtain high reliability. Further, the one or more routing processor servers *per se* can be backed up one another to implement high availability. Preferably, in the relevant hardware system, especially in a PC machine or a PC server, an extension card can be inserted as required to support relevant function extension related to real-time processing requirement, for example a real-time clock extension card can be inserted to implement the provision of a large amount of clock signals and so on, so as to ensure the implementation of the functions of the virtual routers.

The routing processor server and the routing processor module of the router work together to enable the functions of multiple virtual routing processors operate in a coordinated manner. According to different implementation requirements, the routing processor server may have routing processor functions of multiple virtual routers and a main processing system program. The routing processors can be specifically implemented via virtual machines in the routing processor server, with each virtual machine running one routing processor image, so as to implement the same function as an independent routing processor. Alternatively, the routing processor can be implemented based on software processes, with multiple routing processor images sharing resources of processing, etc., so as to improve the processing efficiency of the resources. Specifically, each routing processor image has its own independent routing table, routing protocol, related management protocol stack functions and related parameter configuration or management. Under the coordination of the main processing (system) program, multiple routing processor images share resources and implement the routing processor function required by the virtual routers.

In a preferred implementation of this embodiment, the routing processor server is extendable. For example, the extension can be implemented by adding a new PC or PC server to a PC cluster or PC server cluster, or by adding a processing card to a blade server or to an ATCA system.

In order to implement the function of the virtual routers, the router can be connected to one or more routing processor servers via a network or an Ethernet switch, for example, via a highly reliable and secure network or a dedicated network in the case of wide area (meaning that the router and the one or more routing processor servers are deployed in different sites) deployment.

The Ethernet switch connecting the one or more routing processor servers and the router may be a gigabit Ethernet switch, further, 10 gigabit Ethernet switch may also be used as required (primarily under the circumstance where a large amount of information needs to be transmitted). In the case of wide area deployment, the connection can be implemented with a highly reliable tunnel of a public or dedicated network. According to the requirement on reliability, the connection can be implemented by two switches which provide backup for each other.

In addition, when the one or more routing processor servers are connected to an existing router via a network, they are generally connected via the interface or management interface of the existing router or an extended network interface, so that the one or more routing processor servers can be connected to each related interface card and switching card and so on, as the same as the routing processor module connected in the existing router, so as to implement the virtual routers. There may be multiple schemes for particular connection implementation. The basic thought is: implementing the extension and control of the one or more routing processor servers by utilizing the connections between the existing routing processor modules and other modules in the router system. For example, the first scheme is that: the one or more routing processor servers can be connected to the router via an ordinary user service interface of the router system, but the service traffic of the interface card should be connected to the existing routing processor module to implement the extension. The second possible extension scheme is: adding an extension interface to the existing routing processor module and the external routing processor server can be connected via this extension interface. The third scheme is that: the routing processor module or main processing card in the existing router can be replaced with a new extension card, the fundamental function of which is to forward the protocol and control information related to the router to the routing processor server and conduct communication with each of the original modules; in this scheme, functions related to routing processing are completely handed to the routing processor server.

In the above-mentioned second scheme, i.e. when extension connection is implemented by using the existing routing processor module, the function of the existing routing processor module should be extended to support the coordination with the routing processor server, so that the number of the virtual routers can be extended. The situation of the first scheme is similar with that of the second scheme, and the difference lies in that, in the first scheme, the routing processor server is connected via the ordinary interface or sub-interface of the router. After a dedicated tunnel has been established between the interface and the routing processor server, the particular processing of the first scheme is the same as that of the second scheme. As for the third scheme, the extension card, which serves as the replacement of the existing routing processer module or main processing card, forwards the protocol packet which comes from the interface card to the routing processor server, so that the routing processor server can then process this protocol packet.

Further, both the main and backup routing processor module of the router system having the above-mentioned backup routing processor server can be replaced and can be respectively connected to the routing processor server to improve the reliability of the system.

Since a complicated connection relationship might exist between the router and the one or more routing processor servers, a simple implementation is to provide one or more fixed network connections between the router and the one or more routing processor servers; in this way, the complexity of the connection can be simplified.

In a preferred embodiment of the present invention, the one or more routing processor servers can also support the configuration and management functions for each virtual router. For example, for the virtual router, the functionalities of an independent router can be simulated, enabling the owner of the virtual router to perform protocol installation and configuration, the configuration of the interface, and the activation and performance monitoring of related functions, etc. on this virtual router. In specific implementation, the functions of the one or more routing processor servers can be further extended to include extended management functions. In conventional router design, these functions are generally included in a main processing board. The one or more routing processor servers may also include the management function of the router, i.e. include the routing processing and management functions. For example, the configuration of the router by the related user can be collected to form one or more configuration management files which are then uniformly sent to the corresponding virtual router for processing; or the interactive configuration management function is supported to enable the user directly configure the virtual router.

Further, the routing processor server may also be implemented by updating the software in the routing processor module of the existing router.

According to different network deployment requirements and particular application requirements, the interfaces of the virtual router may be physical interfaces or logical interfaces (which can be called sub-interfaces). In consideration of the implementation cost and the convenience of network deployment, one physical interface can be divided into multiple logical interfaces or sub-interfaces for sharing or effective usage. Therefore, when configuring the router, especially the virtual router (or called logical router), the physical interface can be logically divided into different logical interfaces according to the network topology and the plan of particular service traffic, so that the logical interfaces can be allocated to different virtual routers to accomplish different network configurations. Moreover, the related logical interfaces are correlated to corresponding virtual routers. Different virtual routers can be distinguished by RouterID/NetID, which can be set by an operator or the manager or owner of the router according to a set of rules, for example, RouterID/NetID may include the name of the operator and the name of the client or abbreviations thereof, and other attributes such as location information, function information, number information and so on. The typical RouterID/NetID may be, for example, a 32-bit value. The particular size of the RouterID/NetID is not forcedly limited, and other values such as 16 bits, or 48 bits or 64 bits can also be adopted according to different requirements.

In the situation that the virtual routers are supported, after the configuration of the related interfaces is completed and executed, some differences appear to the processing flow of the packet received on the interface compared with that of an ordinary router, especially the packet received on the logical interface should be marked with a RouterID/NetID identifier. In this embodiment, different processing can be used for the following two kinds of packets: for the routing protocol packet or the related management protocol packet, it is further sent to the corresponding RP of the routing processor server for processing according to the RouterID/NetID configuration; and for the data packet, it is directly forwarded according to the forwarding table.

For example, when processing the protocol packet, the corresponding routing processor server generates/updates the related routing table entry or performs other related operations, for example a routing maintenance operation and so on.

Related data packet needs to be sent to a forwarding processing component for further processing according to the FIB (forwarding information base or forwarding table). The forwarding processing component is generally implemented on the interface card. In the situation where the virtual routers are implemented, the forwarding processing component can be further distinguished or divided into the forwarding processing parts of multiple virtual routers, and the corresponding FIBs should be formed to support multiple FIBs in the interface card. When a packet is received from an interface or sub-interface, a virtual router corresponding to the packet can be determined according to configurations, a RouterID/NetID field of the corresponding virtual router is added to the packet, and then the packet is sent to the corresponding virtual router. The virtual router performs lookup according to the destination address of the packet. When an appropriate entry is found, the packet is forwarded according to the related interface. After the packet arrives at the egress interface/sub-interface, the related packet is mapped to the corresponding virtual router according to the NetID field. The virtual router obtains the egress interface or sub-interface of the packet according to the FIB, restores the original packet (equivalent to the packet before the virtual routers are implemented) by deleting the NetID field from the packet, performs related processing, for example the processing of the TTL (time to live) field and so on, and further performs necessary encapsulation as required (mainly including layer 2 encapsulation of an IP packet, and possible tunnel encapsulation and so on) and then sends out the packet to the corresponding interface or sub-interface.

In a preferred embodiment of the present invention, the switching of the virtual router (between different interfaces) is implemented by making the best use of the existing switching fabric (or switching mechanism). In addition, in the prior art router design, the capacity of the switching fabric matches that of the interfaces, e.g., non-blocking switching. Therefore, when the virtual routers are implemented, such property can be used, making full use of the non-blocking switching property of the switching fabric and making the maximum use of the capacity and function of the existing router system. That is, the switching fabric is shared between different virtual routers.

In this embodiment, when the virtual routers are implemented, the switching fabric needs to implement switching or forwarding functions when multiple FIBs exist, not only one FIB exists as the prior art. In principle, each virtual router needs to perform switching and forwarding between its own virtual interfaces, and the existing switching fabric of the router should meet a plurality of different switching and forwarding requirements. Since the forwarding interface or sub-interface of the virtual router can be mapped to the corresponding physical interface, different virtual routers can still use the original switching fabric, and what needs to be improved is to add the NetID field to the packet to distinguish different virtual routers at the sub-interfaces of the virtual routers, in this way, switching fabric sharing can be implemented.

Particularly, for the interface information of the virtual router, information about the corresponding physical interface of the virtual router should also be attached (this information is obtained by the preceding interface configuration), and the switching between the virtual router interfaces is actually implemented by mapping the related virtual interface to the corresponding physical interface. Particularly, when the switching and forwarding are performed according to the forwarding table of the virtual router, the related packet is actually mapped onto the particular physical interface after being attached with a NetID field. The switching between related physical interfaces is based on the existing switching mechanism, so the implementation of the switching function of the virtual router can be ensured under the typical configuration of the router. The first situation is that: in the case where the switching mechanism is Crossbar switching, scheduling can be performed between different ports (physical interfaces/sub-interfaces) via a switching scheduling algorithm to implement switching. When the packet arrives at the egress destination port, the packet is further mapped to the belonged virtual router according to the NetID field attached to the packet, and relevant processing and forwarding functions are implemented by the virtual router according to the FIB of the virtual router. Further, in the case of Crossbar, for a large-scale device, a multi-stage switching fabric may be used, and the same mechanism can be used to implement the switching of the virtual router under such scenario.

Another situation is that: since there is no independent switching fabric, the switching can be implemented via a software process in a medium/low-end router implementation. The scheduling of the packet also has a similar processing procedure, i.e., switching between different ports can be implemented via the software process; therefore, the switching scheme of the virtual router similar to that in the first situation is also applied. Further, at the egress interface, the related packets are sent to the corresponding virtual routers respectively according to the NetID; and different virtual routers perform further processing according to their own forwarding tables, wherein such processing mainly includes: processing the TTL (time to live) of the packet and performing necessary encapsulation and so on; at last, the processed packets are forwarded to respective egress interfaces or sub-interfaces.

Further, according to the preceding connection scheme between the router and the one or more routing processor servers, the interfaces between the router and the one or more routing processor servers can be further standardized, so as to further simplify the implementation of the virtual routers, reduce the total costs of the router ownership and has the low cost advantage. Through the one or more standardized interfaces, the present invention can support devices from different router manufacturers and of different router model to share the same routing processor server, therefore, the router manufacturers do not need to design their own routing processor server systems and related functions independently.

The interface protocol function between the router and the one or more routing processor servers can be standardized to implement a secure, reliable and standardized connection. Security can be guaranteed by multiple methods in the related art, for example, by performing mutual authentication between the router and the one or more routing processor servers, and by further performing encryption of the transmission protocol, etc. As previously stated, delivered between the router and the one or more routing processor servers is mainly the routing protocol packet, and this content does not have any difference in different router implementation (of course, contents from different routers should be distinguished). The difference lies in that this connection is originally implemented inside the router, and some relevant information about management or proprietary to the manufacturer might be included. In order to solve this problem, a possible solution is that the one or more routing processor servers can be configured with some information and processing methods proprietary to the corresponding manufacturers when being applied to different routers, so as to satisfy different implementation of different routers and to improve the adaptability. Accordingly, the one or more routing processor servers should be provided with related configuration tools to support this configuration function. In short, such standardized interface connection includes: a connection protocol, an authentication and information security method, format and content of the information exchanging.

### Embodiment 2

In this embodiment, the routing processor server is implemented by extending the routing processor modules (which can also be called routing processor unit) in a router, and the virtual routers can be implemented correspondingly.

Fig. 6 is a schematic diagram of a device as an implementation solution of virtual routers by extension of routing processor unit.

As shown in Fig. 6, in comparison with embodiment 1, this embodiment is a dedicated system using standalone device design to implement virtual routers. In this embodiment, one or more virtual routing processor extension boards (one virtual routing processor extension board is used typically, which not only implements the extension of the functions, but also ensures the relatively compact structure of the device and has the low cost advantage at the same time; of course, the use of multiple virtual routing processor extension boards is not excluded) are inserted into the router. The virtual routing processor extension board includes at least one processor and related memory, and/or at least one hard disk unit, so as to implement the extension of relevant routing processing capability. The newly added virtual routing processor extension board and the original routing processor (RP) module support the implementation of multiple virtual routers together, and work as the routing processor server of multiple different virtual routers. Preferably, the function of the routing processor server can be extended by controlling and coordinating the operation of the virtual routing processor extension board and existing routing processor modules. As shown in Fig. 6, the newly added virtual routing processor extension board can be connected to other system components via the existing system control bus of the original routing processor module.

In a preferred embodiment of the present invention, an implementation may be that: the one or more routing processor modules and the one or more virtual routing processor extension boards are virtualized to multiple routing processor instances, which share the one or more routing processor modules and the one or more virtual routing processor extension boards. According to the underlying system design, the function of the virtual routers is implemented by the thread(s)/process(es) cooperating with related hardware resources. Particularly, each virtual router has one routing image, and different routing images can use the routing processing resources in a time-sharing manner. The routing image includes at least: a routing information base, the type and status of the routing protocol, and management information.

The other aspects of the implementation of the virtual routers include the partition, allocation and configuration of the related interface and the implementation of the relevant forwarding function, all of which are the same as that of embodiment 1. It is briefly described as follows, i.e., the virtual routers are partitioned according to the sub-interfaces or interfaces, multiple forwarding tables are supported in the line card, each forwarding table corresponding to different virtual router. The packets received from the interfaces or sub-interfaces should be added with a NetID field for distinguishing and separation of different virtual routers, after being processed according to the FIBs, the packets pass through the switching fabric and arrive at the egress interfaces of the corresponding virtual routers according to the NetIDs. The virtual router obtains the egress interface or sub-interface of the packet according to the FIB, restores the original packet (equivalent to the packet before the virtual routers are implemented) by deleting the NetID field from the packet, and performs related processing, for example the processing of the TTL (time to live) field and so on, and further performs necessary encapsulation as required (mainly including layer 2 encapsulation of an IP packet, and possible tunnel encapsulation and so on) and then sends out the packet to the corresponding interface or sub-interface.

In summary, by means of the solution for implementing the virtual routers provided by the embodiments of the present invention, the function of the virtual routers can be implemented, and the low-cost implementation requirement can be satisfied.

From the description above, it can be seen that the present invention achieves the following technical effects:
In the embodiments of the present invention, the router extends the routing processing capability by at least one external routing processor server to implement multiple virtual routers. The one or more interfaces or one or more sub-interfaces of the router can be configured to be associated with different virtual routers, wherein the different virtual routers are distinguished with different virtual router identifiers. That is, in the embodiments of the present invention, one or more external routing processor servers can be used to implement the virtual routers, therefore, the implementation of the embodiments of the present invention does not
need the high-performance router, i.e., even a low-end router can be used to
implement virtual routers, in this way, low-cost virtual routers can be implemented. In addition, because one or more external routing processor servers are used to implement the virtual routers, in the case where a large number of virtual routers are needed, the problem that the amount of virtual routers implemented is not big enough in the related art can be solved by using one or more routing processor servers or using the higher performance routing processor server so as to implement the virtual routers according to practical requirements.

Obviously, those skilled in the art should know that each of the mentioned modules or steps of the present invention can be implemented by universal computing devices; the modules or steps can be focused on single computing device, or distributed on the network formed by multiple computing devices; selectively, they can be implemented by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be implemented. In this way, the present invention is not restricted to any particular hardware and software combination.

The descriptions above are only the preferable embodiment of the present invention, which are not used to restrict the present invention, for those skilled in the art, the present invention may have various changes and variations.

## Claims

1. A virtual router system comprising one or more routers (1), each router (1) comprising one or more interface modules (10),
wherein each interface module (10) comprises: at least one packet processing functional module (100), a forwarding module (104) and one or more forwarding information bases, FIBs (102), wherein one or more physical interfaces of the interface module or one or more sub-interfaces of the one or more physical interfaces are assigned to different virtual routers accordingly, and one-to-one correspondence exists between each virtual router and related physical interface or sub-interface,
the virtual router system further comprises one or more routing processor servers (2), the one or more routers (1) and the one or more routing processor servers (2) being connected via an Ethernet switch or a network, each routing processor server (2) comprising multiple routing processors (20), wherein one-to-one correspondence exists between each routing processor and related virtual router, and each routing processor is configured to execute the routing processing function of the corresponding virtual router,
said one or more routing processor servers (2) being configured to collect or receive configuration and management information of the virtual routers and configure and manage the virtual routers according to the configuration and management information collected or received.

2. The system according to claim 1, **characterized in that** the one or more routing processor servers (2) comprise one of the following: a personal computer, PC, cluster, a PC server cluster, a blade server or blade server cluster, and a dedicated computer system.

3. The system according to claim 2, **characterized in that** the one or more routing processor servers (2) are extended by one of the following means: adding a PC to the PC cluster, adding a PC server to the PC server cluster, adding an extension module to the blade server and adding an extension module to the dedicated computer system.

4. The system according to claim 1, **characterized in that** each router (1) further comprises a routing processor (12) module or a main processing module (14), wherein the one or more routing processor servers (2) coordinate with the routing processor module (12) or the main processing module (14) to implement the multiple routing processors by creating and running multiple routing processor instances.

5. The system according to claim 1, **characterized in that** the different virtual routers have different virtual router identifiers, wherein the virtual router identifiers are configured router identifiers, RouterIDs, or network identifiers, NetIDs,.

6. The system according to claim 5, **characterized in that** the one or more routers (1) are connected to the one or more routing processor servers (2) by one of the following means: via physical interfaces used for user service traffic of the one or more routers; via an interface provided by replacement of the routing processor module or main processing module of the one or more routers, wherein the replacement of the routing processor module or main processing module is configured to forward protocol and control information about the one or more routers to the one or more routing processor servers; via an extension interface of the routing processor module of each router.

7. The system according to any one of claims 1 to 5, **characterized in that** the one or more routing processor servers (2) are implemented by inserting one or more virtual routing processor extension boards into the one or more routers or are directly implemented by the routing processor module of the one or more routers.

8. The system according to claim 1, **characterized in that** the routing processing function of the routing processors is implemented by running different routing processor images on different virtual machines in the one or more routing processor servers.

9. The system according to any one of claims 1 to 5, **characterized in that** the one or more routers (1) and the one or more routing processor servers (2) are connected by a standardized interface.

10. A method for implementing virtual routers, applied to a virtual router system comprising one or more routers (1), each router (1) comprising one or more interface modules (10), the method comprising the steps of:
receiving, by a router among said one or more routers (1), a packet from a physical interface of the own interface module (10);
according to configuration information about a virtual router corresponding to the physical interface or sub-interface, adding virtual router identifier information of the virtual router to the packet; and
the interface module (10) executing the packet processing function, and forwarding the packet which is added with the virtual router identifier information according to the type of the packet,
wherein one or more physical interfaces of the interface module or one or more sub-interfaces of the one or more physical interfaces are assigned to different virtual routers accordingly, and one-to-one correspondence exists between each virtual router and related physical interface or sub-interface,
wherein the virtual router system further comprises one or more routing processor servers (2), the one or more routers (1) and the one or more routing processor servers (2) being connected via an Ethernet switch or a network, each routing processor server (2) comprising multiple routing processors (20), wherein one-to-one correspondence exists between each routing processor and related virtual router, and each routing processor is configured to execute the routing processing function of the corresponding virtual router,
the method further comprising carrying out, by said one or more routing processor servers (2), the steps of: collecting or receiving configuration and management information of the virtual routers and configuring and managing the virtual routers according to the configuration and management information collected or received.

11. The method according to claim 10, **characterized in that** the packet is a protocol packet; the packet processing functional module of the interface module sends the packet which is added with the virtual router identifier information to the routing processor of the corresponding virtual router in one or more routing processor servers, and the corresponding routing processor generates or updates the corresponding routing table entry according to the packet.

12. The method according to claim 10, **characterized in that** the packet is a data packet; and the interface module executing the packet processing function, and forwarding the packet which is added with the virtual router identifier information according to the type of the packet comprises:
performing lookup in the forwarding information base, FIB, of the corresponding virtual router using the destination address of the packet;
when a corresponding entry of the packet is found, according to interface information in the corresponding entry, triggering one or more switching modules of the router to schedule and then forward the packet; and
when the packet arrives at the egress interface module, the corresponding interface module executing the packet processing function, decapsulating the virtual router identifier information from the packet, processing and encapsulating the packet from which the virtual router identifier information is deleted, and forwarding the packet to the corresponding physical interface or sub-interface.

## Patentansprüche

1. Virtuelles Routersystem, das einen oder mehrere Router (1) umfasst, wobei jeder Router (1) ein oder mehrere Schnittstellenmodule (10) umfasst,
wobei jedes Schnittstellenmodul (10) umfasst: mindestens ein Paketverarbeitungsfunktionsmodul (100), ein Weiterleitungsmodul (104) und eine oder mehrere Weiterleitungsinformationsdatenbanken, FIBs (102), wobei eine oder mehrere physische Schnittstellen des Schnittstellenmoduls oder eine oder mehrere Unterschnittstellen der einen oder mehreren physischen Schnittstellen verschiedenen virtuellen Routern entsprechend zugeordnet sind, und zwischen jedem virtuellen Router und zugehöriger physischer Schnittstelle oder Unterschnittstelle Eins-zu-Eins-Entsprechung besteht,
das virtuelle Routersystem weiter einen oder mehrere Routingprozessorserver (2) umfasst, wobei der eine oder die mehreren Router (1) und der eine oder die mehreren Routingprozessorserver (2) über einen Ethernet-Switch oder ein Netzwerk verbunden sind, wobei jeder Routingprozessorserver (2) mehrere Routingprozessoren (20) umfasst, wobei zwischen jedem Routingprozessor und zugehörigem virtuellen Router Eins-zu-Eins-Entsprechung besteht, und jeder Routingprozessor dazu konfiguriert ist, die Routingverarbeitungsfunktion des entsprechenden virtuellen Routers auszuführen,
wobei der eine oder die mehreren Routingprozessorserver (2) dazu konfiguriert sind, Konfigurations- und Verwaltungsinformationen der virtuellen Router zu sammeln oder zu empfangen und die virtuellen Router gemäß den gesammelten oder empfangenen Konfigurations- und Verwaltungsinformationen zu konfigurieren und zu verwalten.

2. System nach Anspruch 1, **dadurch gekennzeichnet, dass** der eine oder die mehreren Routingprozessorserver (2) eines der folgenden umfassen: ein Personalcomputer-, PC, Cluster, ein PC-Servercluster, einen Bladeserver oder Bladeserver-Cluster, und ein dediziertes Computersystem.

3. System nach Anspruch 2, **dadurch gekennzeichnet, dass** der eine oder die mehreren Routingprozessorserver (2) durch eines der folgenden Mittel erweitert werden: Hinzufügen eines PCs zum PC-Cluster, Hinzufügen eines PC-Servers zum PC-Servercluster, Hinzufügen eines Erweiterungsmoduls zum Bladeserver, und Hinzufügen eines Erweiterungsmoduls zum dedizierten Computersystem.

4. System nach Anspruch 1, **dadurch gekennzeichnet, dass** jeder Router (1) weiter ein Routingprozessormodul (12) oder ein Hauptverarbeitungsmodul (14) umfasst, wobei sich der eine oder die mehreren Routingprozessorserver (2) mit dem Routingprozessormodul (12) oder dem Hauptverarbeitungsmodul (14) abstimmen, um die mehreren Routingprozessoren durch Erzeugen und Ausführen von mehreren Routingprozessorinstanzen zu implementieren.

5. System nach Anspruch 1, **dadurch gekennzeichnet, dass** die verschiedenen virtuellen Router verschiedene virtuelle Routerkennungen aufweisen, wobei die virtuellen Routerkennungen konfigurierte Routerkennungen, RouterlDs, oder Netzwerkkennungen, NetIDs, sind.

6. System nach Anspruch 5, **dadurch gekennzeichnet, dass** der eine oder die mehreren Router (1) über eines der folgenden Mittel mit dem einen oder den mehreren Routingprozessorservern (2) verbunden sind: über physische Schnittstellen, die für Benutzerdienstverkehr des einen oder der mehreren Router verwendet werden; über eine Schnittstelle, die durch Ersatz des Routingprozessormoduls oder Hauptverarbeitungsmoduls des einen oder der mehreren Router bereitgestellt wird, wobei der Ersatz des Routingprozessormoduls oder Hauptverarbeitungsmoduls dazu konfiguriert ist, Protokoll- und Steuerungsinformationen bezüglich des einen oder der mehreren Router an den einen oder die mehreren Routingprozessorserver weiterzuleiten; über eine Erweiterungsschnittstelle des Routingprozessormoduls jedes Routers.

7. System nach einem der Ansprüche 1 bis 5, **dadurch gekennzeichnet, dass** der eine oder die mehreren Routingprozessorserver (2) durch Einsetzen von einer oder mehreren virtuellen Routingprozessor-Erweiterungsplatinen in den einen oder die mehreren Router implementiert werden, oder direkt vom Routingprozessormodul des einen oder der mehreren Router implementiert werden.

8. System nach Anspruch 1, **dadurch gekennzeichnet, dass** die Routingverarbeitungsfunktion der Routingprozessoren durch Ausführen von verschiedenen Routingprozessorabbildungen auf verschiedenen virtuellen Maschinen in dem einen oder den mehreren Routingprozessorservern implementiert wird.

9. System nach einem der Ansprüche 1 bis 5, **dadurch gekennzeichnet, dass** der eine oder die mehreren Router (1) und der eine oder die mehreren Routingprozessorserver (2) über eine standardisierte Schnittstelle verbunden sind.

10. Verfahren zum Implementieren von virtuellen Routern, das auf ein virtuelles Routersystem angewendet wird, welches einen oder mehrere Router (1) umfasst, wobei jeder Router (1) ein oder mehrere Schnittstellenmodule (10) umfasst, wobei das Verfahren die Schritte umfasst des:
Empfangens, durch einen Router aus dem einen oder den mehreren Routern (1), eines Pakets von einer physischen Schnittstelle des eigenen Schnittstellenmoduls (10);
Hinzufügens, gemäß Konfigurationsinformationen bezüglich eines virtuellen Routers, der der physischen Schnittstelle oder Unterschnittstelle entspricht, von virtuellen Routerkennungsinformationen des virtuellen Routers zum Paket; und
Ausführens, durch das Schnittstellenmodul (10), der Paketverarbeitungsfunktion, und Weiterleitens des Pakets, dem die virtuellen Routerkennungsinformationen hinzugefügt wurden, gemäß dem Typ des Pakets,
wobei eine oder mehrere physische Schnittstellen des Schnittstellenmoduls oder eine oder mehrere Unterschnittstellen der einen oder der mehreren physischen Schnittstellen verschiedenen virtuellen Routern entsprechend zugewiesen werden, und zwischen jedem virtuellen Router und zugehöriger physischer Schnittstelle oder Unterschnittstelle Eins-zu-Eins-Entsprechung besteht,
wobei das virtuelle Routersystem weiter einen oder mehrere Routingprozessorserver (2) umfasst, wobei der eine oder die mehreren Router (1) und der eine oder die mehreren Routingprozessorserver (2) über einen Ethernet-Switch oder ein Netzwerk verbunden sind, wobei jeder Routingprozessorserver (2) mehrere Routingprozessoren (20) umfasst, wobei zwischen jedem Routingprozessor und zugehörigem virtuellen Router Eins-zu-Eins-Entsprechung besteht, und jeder Routingprozessor dazu konfiguriert ist, die Routingverarbeitungsfunktion des entsprechenden virtuellen Routers auszuführen,
wobei das Verfahren weiter das Ausführen, durch den einen oder die mehreren Routingprozessorserver (2), der Schritte umfasst des: Sammelns oder Empfangens von Konfigurations- und Verwaltungsinformationen der virtuellen Router, und Konfigurierens und Verwaltens der virtuellen Router gemäß den gesammelten oder empfangenen Konfigurations- und Verwaltungsinformationen.

11. Verfahren nach Anspruch 10, **dadurch gekennzeichnet, dass** das Paket ein Protokollpaket ist; das Paketverarbeitungsfunktionsmodul des Schnittstellenmoduls das Paket, dem die virtuellen Routerkennungsinformationen hinzugefügt wurden, an den Routingprozessor des entsprechenden virtuellen Routers in einem oder mehreren Routingprozessorservern sendet, und der entsprechende Routingprozessor den entsprechenden Routingtabelleneintrag dem Paket gemäß generiert oder aktualisiert.

12. Verfahren nach Anspruch 10, **dadurch gekennzeichnet, dass** das Paket ein Datenpaket ist; und das Ausführen, durch das Schnittstellenmodul, der Paketverarbeitungsfunktion, und Weiterleiten des Pakets, dem die virtuellen Routerkennungsinformationen hinzugefügt wurde, gemäß dem Typ des Pakets umfasst:
Durchführen von Nachschlagen in der Weiterleitungsinformationsdatenbank, FIB, des entsprechenden virtuellen Routers unter Verwendung der Zieladresse des Pakets;
wenn ein entsprechender Eintrag des Pakets gefunden wird, Triggern, gemäß Schnittstelleninformationen im entsprechenden Eintrag, von einem oder mehreren Schaltmodulen des Routers, um das Paket zu planen und dann weiterzuleiten; und
wenn das Paket am ausgangsseitigen Schnittstellenmodul ankommt, Ausführen, durch das entsprechende Schnittstellenmodul, der Paketverarbeitungsfunktion, Entkapseln der virtuellen Routerkennungsinformationen aus dem Paket, Verarbeiten und Einkapseln des Pakets, aus dem die virtuellen Routerkennungsinformationen gelöscht werden, und Weiterleiten des Pakets an die entsprechende physische Schnittstelle oder Unterschnittstelle.

## Revendications

1. Système de routeur virtuel comprenant un ou plusieurs routeurs (1), chaque routeur (1) comprenant un ou plusieurs modules d'interface (10),
dans lequel chaque module d'interface (10) comprend : au moins un module fonctionnel de traitement de paquets (100), un module de transmission (104) et une ou plusieurs bases d'informations de transmission, FIB (102), dans lequel une ou plusieurs interfaces physiques du module d'interface ou une ou plusieurs sous-interfaces des une ou plusieurs interfaces physiques sont attribuées à des routeurs virtuels différents en conséquence, et une correspondance biunivoque existe entre chaque routeur virtuel et une interface physique ou sous-interface associée,
le système de routeurs virtuels comprend en outre un ou plusieurs serveurs de processeurs de routage (2), les un ou plusieurs routeurs (1) et les un ou plusieurs serveurs de processeurs de routage (2) étant connectés via un commutateur Ethernet ou un réseau, chaque serveur de processeurs de routage (2) comprenant de multiples processeurs de routage (20), dans lequel une correspondance biunivoque existe entre chaque processeur de routage et un routeur virtuel associé, et chaque processeur de routage est configuré pour exécuter la fonction de traitement de routage du routeur virtuel correspondant,
lesdits un ou plusieurs serveurs de processeurs de routage (2) étant configurés pour collecter ou recevoir des informations de configuration et de gestion des routeurs virtuels et configurer et gérer les routeurs virtuels en fonction des informations de configuration et de gestion collectées ou reçues.

2. Système selon la revendication 1, **caractérisé en ce que** les uns ou plusieurs serveurs de processeurs de routage (2) comprennent un parmi ce qui suit : un groupe d'ordinateurs personnels, PC, un groupe de serveurs de PC, un serveur lame ou un groupe de serveurs lame et un système informatique dédié.

3. Système selon la revendication 2, **caractérisé en ce que** les un ou plusieurs serveurs de processeurs de routage (2) sont étendus par un des moyens suivants : l'ajout d'un PC au groupe de PC, l'ajout d'un serveur de PC au groupe de serveurs de PC, l'ajout d'un module d'extension au serveur lame et l'ajout d'un module d'extension au système informatique dédié.

4. Système selon la revendication 1, **caractérisé en ce que** chaque routeur (1) comprend en outre un module de processeur de routage (12) ou un module de traitement principal (14), dans lequel les un ou plusieurs serveurs de processeurs de routage (2) se coordonnent avec le module de processeur de routage (12) ou le module de traitement principal (14) pour mettre en oeuvre les multiples processeurs de routage en créant et en exécutant de multiples instances de processeur de routage.

5. Système selon la revendication 1, **caractérisé en ce que** les différents routeurs virtuels ont des identificateurs de routeur virtuel différents, dans lequel les identificateurs de routeur virtuel sont des identificateurs de routeur, RouterlD, ou des identificateurs de réseau, NetID, configurés.

6. Système selon la revendication 5, **caractérisé en ce que** les un ou plusieurs routeurs (1) sont connectés aux un ou plusieurs serveurs de processeurs de routage (2) par un des moyens suivants : via des interfaces physiques utilisées pour un trafic de service d'utilisateur des un ou plusieurs routeurs ; via une interface fournie par remplacement du module de processeur de routage ou du module de traitement principal des un ou plusieurs routeurs, dans lequel le remplacement du module de processeur de routage ou du module de traitement principal est configuré pour transmettre des informations de protocole et de commande concernant les un ou plusieurs routeurs aux un ou plusieurs serveurs de processeurs de routage ; via une interface d'extension du module de processeur de routage de chaque routeur.

7. Système selon l'une quelconque des revendications 1 à 5, **caractérisé en ce que** les un ou plusieurs serveurs de processeurs de routage (2) sont mis en oeuvre en insérant une ou plusieurs cartes d'extension de processeur de routage virtuel dans les un ou plusieurs routeurs ou sont directement mis en oeuvre par le module de processeur de routage des un ou plusieurs routeurs.

8. Système selon la revendication 1, **caractérisé en ce que** la fonction de traitement de routage des processeurs de routage est mise en oeuvre en exécutant différentes images de processeur de routage sur différentes machines virtuelles dans les un ou plusieurs serveurs de processeurs de routage.

9. Système selon l'une quelconque des revendications 1 à 5, **caractérisé en ce que** les un ou plusieurs routeurs (1) et les un ou plusieurs serveurs de processeurs de routage (2) sont connectés par une interface normalisée.

10. Procédé pour la mise en oeuvre de routeurs virtuels, appliqué à un système de routeurs virtuels comprenant un ou plusieurs routeurs (1), chaque routeur (1) comprenant un ou plusieurs modules d'interface (10), le procédé comprenant les étapes suivantes :
la réception, par un routeur parmi lesdits un ou plusieurs routeurs (1), d'un paquet à partir d'une interface physique du propre module d'interface (10) ;
en fonction d'informations de configuration concernant un routeur virtuel correspondant à l'interface physique ou sous-interface, l'ajout d'informations d'identificateur de routeur virtuel du routeur virtuel au paquet ; et
l'exécution par le module d'interface (10) de la fonction de traitement de paquets et transmettant le paquet auquel sont ajoutées les informations d'identificateur de routeur virtuel en fonction du type du paquet,
dans lequel une ou plusieurs interfaces physiques du module d'interface ou une ou plusieurs sous-interfaces des une ou plusieurs interfaces physiques sont attribuées à des routeurs virtuels différents en conséquence, et une correspondance biunivoque existe entre chaque routeur virtuel et une interface physique ou sous-interface associée,
dans lequel le système de routeurs virtuels comprend en outre un ou plusieurs serveurs de processeurs de routage (2), les un ou plusieurs routeurs (1) et les un ou plusieurs serveurs de processeurs de routage (2) étant connectés via un commutateur Ethernet ou un réseau, chaque serveur de processeurs de routage (2) comprenant de multiples processeurs de routage (20), dans lequel une correspondance biunivoque existe entre chaque processeur de routage et un routeur virtuel associé, et chaque processeur de routage est configuré pour exécuter la fonction de traitement de routage du routeur virtuel correspondant,
le procédé comprenant en outre l'exécution, par lesdits un ou plusieurs serveurs de processeurs de routage (2), des étapes suivantes : la collecte ou la réception d'informations de configuration et de gestion des routeurs virtuels et la configuration et la gestion des routeurs virtuels en fonction des informations de configuration et de gestion collectées ou reçues.

11. Procédé selon la revendication 10, **caractérisé en ce que** le paquet est un paquet de protocole ; le module fonctionnel de traitement de paquets du module d'interface envoie le paquet auquel sont ajoutées les informations d'identificateur de routeur virtuel au processeur de routage du routeur virtuel correspondant dans un ou plusieurs serveurs de processeurs de routage, et le processeur de routage correspondant génère ou met à jour l'entrée de table de routage correspondante en fonction du paquet.

12. Procédé selon la revendication 10, **caractérisé en ce que** le paquet est un paquet d'informations ; et l'exécution par le module d'interface de la fonction de traitement de paquets et transmettant le paquet auquel sont ajoutées les informations d'identificateur de routeur virtuel en fonction du type du paquet comprend :
l'exécution d'une recherche dans la base d'informations de transmission, FIB, du routeur virtuel correspondant en utilisant l'adresse de destination du paquet ;
quand une entrée correspondante du paquet est trouvée, en fonction d'informations d'interface dans l'entrée correspondante, le déclenchement d'un ou plusieurs modules de commutation du routeur pour planifier et ensuite transmettre le paquet ; et
quand le paquet arrive au module d'interface de sortie, l'exécution par le module d'interface correspondant de la fonction de traitement de paquets, la décapsulation des informations d'identificateur de routeur virtuel par rapport au paquet, le traitement et l'encapsulation du paquet duquel les informations d'identificateur de routeur virtuel sont supprimées, et la transmission du paquet à l'interface physique ou la sous-interface correspondante.
